# EUROPEAN PATENT SPECIFICATION

(11) **EP 3 490 936 B1**
(45) Date of publication and mention of the grant of the patent: **11.12.2019**
(21) Application number: 17751027.8
(22) Date of filing: 12.07.2017
(51) Int. Cl.: C01G 9/02, A01N 25/34, A01N 59/00, C09K 11/08

(54) **HABIT MODIFIED CRYSTALS OF ZINC OXIDE**
HABITUSMODIFIZIERTE KRISTALLE VON ZINKOXID
CRISTAUX D'OXYDE DE ZINC MODIFIÉS

(30) Priority: 29.07.2016 EP 16181888
(43) Date of publication of application: 05.06.2019
(73) Proprietor: Unilever N.V., 3013 AL Rotterdam (NL); Unilever PLC, London, Greater London EC4Y 0DY (GB)
(72) Inventor: DAS, Somnath, Bangalore 560 066 (IN); PRAMANIK, Amitava, Bangalore 560 066 (IN)
(74) Representative: Tansley, Sally Elizabeth
(86) International application number: PCT/EP2017/067579
(87) International publication number: WO 2018/019595

(56) References cited:
- Johannes Baier ET AL: "Bio-inspired mineralization of zinc oxide in presence of ZnO-binding peptides", , 1 January 2012 (2012-01-01), pages 380-391, XP055314053, Retrieved from the Internet: URL:http://biointerfaceresearch.com/?downl oad=293 [retrieved on 2016-10-26]
- DANHONG YAN ET AL: "Characterization and Bacterial Response of Zinc Oxide Particles Prepared by a Biomineralization Process", JOURNAL OF PHYSICAL CHEMISTRY PART B: CONDENSED MATTER, MATERIALS, SURFACES, INTERFACES & BIOPHYSICAL, vol. 113, no. 17, 30 April 2009 (2009-04-30), pages 6047-6053, XP055313347, US ISSN: 1520-6106, DOI: 10.1021/jp808805w
- YIN PENG ET AL: "Polymer-Controlled Crystallization of Zinc Oxide Hexagonal Nanorings and Disks", JOURNAL OF PHYSICAL CHEMISTRY PART B: CONDENSED MATTER, MATERIALS, SURFACES, INTERFACES & BIOPHYSICAL, vol. 110, no. 7, 1 February 2006 (2006-02-01), pages 2988-2993, XP055313670, US ISSN: 1520-6106, DOI: 10.1021/jp056246d
- OSAMU YAMAMOTO: "Influence of particle size on the antibacterial activity of zinc oxide", INTERNATIONAL JOURNAL OF INORGANIC MATERIALS, vol. 3, no. 7, 1 November 2001 (2001-11-01), pages 643-646, XP055043689, ISSN: 1466-6049, DOI: 10.1016/S1466-6049(01)00197-0
- M. MO ET AL: "Self-Assembly of ZnO Nanorods and Nanosheets into Hollow Microhemispheres and Microspheres", ADVANCED MATERIALS, vol. 17, no. 6, 22 March 2005 (2005-03-22) , pages 756-760, XP055313662, DE ISSN: 0935-9648, DOI: 10.1002/adma.200401477

## Description

### Field of the invention

The present invention relates to synthesis and use of habit modified crystals of zinc oxide.

### Background of the invention

Zinc oxide is a potent bacteriostatic agent, i.e., it can arrest the growth of bacteria on a substrate or in a medium, but it does not have appreciable bactericidal activity. Zinc oxide is known for its photoluminescence and photocatalytic activity.

Crystals of zinc oxide exist in the form of hexagonal rods of different sizes. Recent publications indicate that 3D structures of zinc oxide make up the largest group, which includes nanorods, needles, helixes, springs, rings, ribbons, tubes, belts, wires and combs, dandelion, flower snowflakes, coniferous and urchin-like. Zinc oxide is also obtainable in 2D structures, such as nanoplate/nanosheet and nanopellets. Examples of one-dimensional structures include nanorods and nanowires.

Zinc oxide has been the subject of several patents and research articles covering various forms, morphologies, crystal structures and applications thereof.

Zinc oxide (ZnO) generally exists as hexagonal rods in the Wurtzite crystal structure where O²⁻ and Zn²⁺ ions are tetrahedrally coordinated and stacked alternately along the Z-axis. Polarity of each crystal face of ZnO is different. In a hexagonal crystal structure, the two hexagonal faces are Zn⁺² rich, consequently they are positively charged, while the six rectangular faces are less positively charged due to the presence of Zn⁺² and O⁻² ions. This also means that the hexagonal faces are polar as compared to the rectangular faces.

Attempts were made in the past to restrict/ modulate the growth of specific faces of ZnO crystal by use of certain molecules, which when present in the reaction medium selectively bind to specific crystal faces resulting in changes in either the shape or the size of the crystal or even both.

Synthesis of ZnO involves the reaction of a zinc salt with a base. Strong bases such as sodium hydroxide and potassium hydroxide spontaneously precipitates ZnO from its salt solution. The resulting particles have hexagonal shape and the sizes may vary depending on the concentration of the reagents used. In order to grow ZnO with specific morphology it is often required to hydrolyze the zinc salt slowly. This is achieved by adding a weak base or a compound (such as ammonia, urea, hexamine) which hydrolyses slowly to provide alkalinity to the medium.

In an article published in Chem. Mater. 2006, 18, 179-186, the authors Gerstel et.al., have discussed the suitability of amino acids and dipeptides as structure-directing agents for the deposition of coatings from aqueous solutions of zinc salts. This article investigates the hydrolysis of zinc salts in presence of amino acids and dipeptides whereby the suitability of such organic molecules as structure-directing agents is discussed. The study demonstrates that such bio-inspired approach provides a means for deposition of a variety of morphologies ranging from grain-like to 2D up to 3D features. Particles formed in the bulk are hexagonal, rod-like particles, which implies that these are grown on the peptide, and do not contain peptides in their matrix.

J. Am. Ceram. Soc., 93 [11] 3726-3731 (2010) discloses synthesis of biomorphic zinc oxide nanostructures by using cetyl trimethyl ammonium bromide (CTAB) modified silk templates. This article discloses a biotemplating approach to produce porous zinc oxide nanostructures. A biotemplate cut from silkworm cocoon is treated with (CTAB), and soaked in zinc nitrate solution, which is thereafter annealed in air at 50 °C. The biotemplate transforms to a hierarchically interwoven network with hollow fibers comprising of zinc oxide nanometer-sized crystallites. Micelles of the CTAB molecules attached to the silk transform the surface charge of the fibers from negative to positive, which leads to assembly of negatively charged zinc ions onto the silk fibers through electrostatic interaction. Further annealing eliminates the organic components of the fibers resulted in a porous ZnO network.

US2014322286A (Sakai Chemicals) discloses antibacterial zinc oxide powder having an average particle diameter of 1.1 µm or more. The powder is surface treated with one or more of silicon oxide, silicone oil, organic silicon compounds, and organic titanium compounds.

CN104017393A [Anhui Henghao Science & Technology Co. Ltd, 2014] discloses a sericite/nano-zinc oxide composite material and a preparation method thereof. The surface of sericite powder is coated with nanoparticles of zinc oxide. The preparation method comprises adding calcium hydroxide or calcium oxide into a mixed system of the sericite powder and zinc sulfate solution to obtain the nano-zinc oxide coated sericite powder composite material. The material has good antibacterial performance.

US20020106413 A1 (Ciba Specialty) discloses the use of a combination of phenolic antibacterial, e.g. triclosan and an inorganic antibacterial agent like zinc oxide in a plastic composition.

An article published in J. Phys. Chem. B 2009, 113, 6047-6053, discloses a process for making zinc oxide particles in silk fibroin after removal of the soluble sericin fraction. The process for making the particles is significantly different; the reaction is done using precipitate of zinc hydroxide as the starting material followed by addition of fibroin. The process results in the formation of zinc oxide particles that do not possess superior antibacterial properties. Thus, it is zinc oxide grown on water insoluble fibroin.

In the article published in Journal of Physical Chemistry B (2009), 113 (17), 6047-6053 is disclosed olive-shaped ZnO particles of ca.1 µm diameter. The particles are synthesised by biomineralization in a template of silk fibroin peptide at room temperature. The peptide coating on the surface of the ZnO particles substantial influence on their morphology during biomineralization. Test results appearing in the article reveal that the mineralized zinc oxide particles are not toxic to *Staphylococcus aureus, Escherichia coli,* and *Streptococcus agalactiae* bacteria.

US 2009/0017303 A1 (Chiy et.al.) discloses a method for increasing photocatalytic activity of zinc oxide, which comprises preparing zinc oxide nano particulate crystals having a planar morphology on their (0001) crystal faces. In addition, the present invention relates to a process for synthesizing zinc oxide nanoplate crystals, a tooth whitening composition and a composition for degrading organic pollutants. The size of conventional zinc oxide particles is reduced to nanometer scale for increasing their surface area as well as increasing ratios of crystal faces with higher catalytic activities, thereby providing zinc oxide nanoplates with much higher photocatalytic activities than conventional zinc oxide particles.

In some other research articles published in scientific journals, a standard process of synthesizing crystals can be found which produces either rod-shaped or compressed cylindrical crystals. The methods disclosed therein generally lead to growth of zinc oxide crystals on a silk/protein substrate. The other standard method involves the generation of rod-shaped zinc oxide nanoparticles by reacting zinc salts with an alkali like an amine, in which some of the protein is trapped.

There is still need for newer and more efficacious materials, especially those having bactericidal property.

This is achieved by use of proteins as crystal habit modifier via in-situ synthesis of zinc oxide particles. We have determined that proteins such as sericin (derived from silk), lysozyme and bovine serum albumin (BSA) help generate a novel morphology of crystals, which provide biocidal activity. We have determined that it is possible to modify the morphology, particle stacking and defects in the crystals by selective use of certain proteins as crystal habit modifiers. These proteins can bind to the crystal faces of ZnO and thereby influence the functionality of the crystals. In addition, we have determined that the proteins affect the crystal formation in the nucleation step resulting in an increase in defects in the crystals.

We have determined that the novel habit modified zinc oxide in accordance with this invention can control and eliminate bacterial growth in a better and more efficacious manner when compared to commercially available zinc oxide as well as zinc oxide with conventional hexagonal morphology.

### Summary of the invention

In accordance with a first aspect is disclosed habit modified crystals of zinc oxide comprising entrapped particles of protein, wherein said crystals are shaped like a disc and are in the form of spherical assemblies of average size 0.8 µm to 1.5 µm and where the thickness of each disc is 10 nm to 30 nm and average diameter is 200 nm to 500 nm wherein said protein is water-soluble and wherein said protein is at least one of sericin, bovine serum albumin, gelatin, egg-albumin, casein, zein, whey or lysozyme. "Average size" means volume based particle size, where particle size equals the diameter of the sphere that has the same volume as a given particle.

In accordance with a second aspect is disclosed a method of making habit modified crystals of zinc oxide of the first aspect, said method comprising the steps of:
(i) mixing aqueous solution of a water-soluble protein with aqueous solution of a non-hydrolysable water-soluble zinc salt wherein said protein is water-soluble and wherein said protein is at least one of sericin, bovine serum albumin, gelatin, egg-albumin, casein, zein, whey or lysozyme;
(ii) adding a weak base thereto;
(iii) heating the reaction mixture of step (ii) to attain a temperature of 60 to 90 °C;
(iv) filtering the contents of step (iii), washing the residue with water and drying it to obtain said habit modified crystals of zinc oxide as the filtrate.

Other aspects of the invention are discussed in details in the description.

### Detailed description of the invention

According to a first aspect is disclosed habit modified crystals of zinc oxide comprising entrapped particles of protein, wherein said crystals are shaped like a disc and are in the form of spherical assemblies of average size 0.8 µm to 1.5 µm and where the thickness of each disc is 10 nm to 30 nm and average diameter is 200 nm to 500 nm wherein said protein is water-soluble and wherein said protein is at least one of sericin, bovine serum albumin, gelatin, egg-albumin, casein, zein, whey or lysozyme. The average size is measured by Malvern Multisizer®, but any equivalent device may also be used.

ZnO typically crystallizes as hexagonal rod-like crystals, having eight faces of which two are regular hexagon and six are rectangular. Habit modification is a process in which additives are introduced in the reaction medium during the formation of zinc oxide crystals which can alter the growth of the crystals thereby allowing and inhibiting growth in particular directions. This results in anisotropy and hence the morphology changes. The term "habit modification" is used commonly in crystal engineering. It is preferred that the protein is water-soluble. It is particularly preferred that the protein is one or more of sericin, bovine serum albumin (BSA), gelatin, egg-albumin, casein, zein, whey or lysozyme.

The morphology of zinc oxide crystals, the particle stacking and defects therein are modified by the selective use of proteins as crystal habit modifiers. Without wishing to be bound by theory, it is believed that these proteins, in particular the water-soluble proteins, can selectively bind to the crystal faces of the zinc oxide crystal, thereby influencing the functionality of the crystals. Further, it is believed that the proteins also affect the crystal formation in the nucleation step, which results in an increase in the defects in the crystals.

Crystalline materials normally crystallize from their solutions as having a shape that resembles their unit cell, the smallest unit of the material. Zinc oxide has the hexagonal unit cell and it typically crystallizes as hexagonal prismatic rods, with two hexagonal faces and six rectangular faces. Deliberate deviation of such natural morphology while crystallization by playing with the crystallization is called crystal habit modification. It could be done by changing physical conditions like subjecting the system to different temperature, pressure, concentration or solvation conditions. Alternatively, one may employ traces of impurities that are known to preferentially adsorb on specific faces of the crystals thereby preventing growth on those faces. These impurities are called crystal habit modifiers. They often remain adsorbed on the faces of the crystals.

In the present invention, proteins, in particular water-soluble ones are used as crystal habit modifiers that are believed to be responsible for deviation in the growth of zinc oxide from its natural hexagonal prismatic morphology to agglomerated fine thin disk-shaped particles forming spherical assemblies.

The habit modified crystals of zinc oxide of the invention are capable of industrial application *inter-alia* in the broad technical fields of home and personal care products. Non-limiting examples of specific fields include skin cleansing, hair care, surface hygiene and household care products.

Zinc oxide is used in several cosmetic compositions but the usual zinc oxide and at least some of its modified variants do not possess sufficient antimicrobial activity. It is a general practice to add known antimicrobial agents to top-up the antibacterial activity. The present invention provides a new material, which has significant antimicrobial efficacy even at lower levels.

### The process:

The method in accordance with the invention comprises the steps of:
(i) mixing aqueous solution of a water-soluble protein with aqueous solution of a non-hydrolysable water-soluble zinc salt wherein said protein is water-soluble and wherein said protein is at least one of sericin, bovine serum albumin, gelatin, egg-albumin, casein, zein, whey or lysozyme;
(ii) adding a weak base thereto;
(iii) heating the reaction mixture of step (ii) to attain temperature of 60 to 90 °C;
(iv) filtering the contents of step (iii), washing the residue with water and drying it to obtain said crystal habit modified zinc oxide as the filtrate.

It is preferred that the non-hydrolysable water-soluble zinc salt is a nitrate, sulphate, acetate or formate. The salt is not the chloride salt. Use of chloride salt with the protein leads to undesirable complexation between zinc ions and the amino acids contained within the proteins.

The term "hydrolysable salt" means salts, which instantly (within five minutes of addition to water) forms either zinc oxide or basic oxy- hydroxides of zinc when added to water. Examples of hydrolysable salts of zinc include anhydrous zinc chloride, zinc complexes of substituted amino alcohols and sodium zincate. It is believed that hydrolysable salts form ZnO particles in the medium therefore, it is not possible to modulate the morphology/ defects/crystallinity when such salts are used.

It is preferred that the weak base is hexamethylenetetramine, urea or magnesium hydroxide. Other preferred weak bases include ammonia, pyridine, hydroxylamine and methylamine. It is necessary that water-soluble protein is made to contact with the non-hydrolysable water soluble zinc salt, before the weak base is introduced into the reaction vessel. This ensures proper complexation of the zinc ions with the amino acid residues in the protein. It is also preferred that the reaction mix, prior to introduction of the weak base, is heated to 40 °C to 60 °C for about 30 minutes. On the other hand, if the base is contacted with the zinc salt prior to addition of the protein, it results in the formation of very small seed crystals of hexagonal zinc oxide particles in the medium. The resultant product may have significantly lower photoluminescence and photo-catalytic activity.

Strong bases, such as sodium hydroxide, should not be used in the process because there is likelihood of faster precipitation.

Upon addition of the weak base, the reaction mixture of step (ii) is heated to attain a temperature of 60 to 90 °C. In a preferred aspect of the method, the heated reaction mixture of step (iii) is autoclaved under pressure of 4 to 6 bar in an inert atmosphere. Autoclaving leads to a more efficacious product as compared to its non-autoclaved counterpart.

In the final step, the contents of step (iii) is filtered by any suitable means. The residue is washed with water and thereafter it is dried to obtain the crystal habit modified zinc oxide as the filtrate.

It is further preferred that the crystal habit modified zinc oxide is calcined at 600 °C to 800 °C. Calcination is also used to imply a thermal treatment process in the absence or limited supply of air or oxygen applied to ores and other solid materials to bring about a thermal decomposition, phase transition, or removal of a volatile fraction. Calcination normally takes place at temperatures below the melting point of a given material.

It is preferred that the photoluminescence emission (at 452 nm wavelength) of the calcined product is at least 8 for a 0.5 mg/mL solution of the product.

### Uses:

The crystal habit modified zinc oxide in accordance with the invention has multiple uses.

Also disclosed in accordance with this invention is habit modified crystals of zinc oxide of the first aspect for non-therapeutic use as an antimicrobial agent.

Further disclosed in accordance with this invention is habit modified crystals of zinc oxide of the first aspect for non-therapeutic use as a bactericidal agent.

Further disclosed in accordance with this invention is habit modified crystals of zinc oxide of the first aspect for use as a photo catalytic material.

Further disclosed in accordance with this invention is habit modified crystals of zinc oxide of the first aspect for use as a photo luminescent material.

Also disclosed in accordance with this invention is use of habit modified crystals of zinc oxide of the first aspect as an antimicrobial agent.

Also disclosed in accordance with this invention is non-therapeutic use of habit modified crystals of zinc oxide of the first aspect as a bactericidal agent.

Also disclosed in accordance with this invention is non-therapeutic use of habit modified crystals of zinc oxide of the first aspect as an antimicrobial agent as a photo catalytic material.

Also disclosed in accordance with this invention is use of habit modified crystals of zinc oxide of the first aspect as an antimicrobial agent a photo luminescent material.

The following non-limiting examples further illustrate preferred embodiments of the invention. All percentages referred to in the examples and throughout this specification are based on total weight unless otherwise indicated.

### EXAMPLES

### Example 1

One gram commercially available sericin was added to 100 ml distilled water. The contents were stirred well until a clear solution was obtained. To this solution, an aqueous solution of 3 g zinc nitrate hexahydrate was added. Thereafter, 1.5 g hexamine was added and the reaction mixture was heated to 70 °C. It was further autoclaved for five hours under pressure of 5.0 bar in an atmosphere of nitrogen. The habit modified crystals of zinc oxide that were formed, were filtered, washed with water and air-dried.

A part of the product was calcined at 700 °C for two hours. The uncalcined and the calcined product were subjected to various tests as described hereinafter.

### Comparative Example 1

In this experiment, all the steps of Example 1 were followed but the weak base was added to the Zn⁺² salt prior to addition of the protein.

### Example 2

This example was identical to Example 1 except that instead of 1 gram sericin, a gram of BSA was used.

### Example 3

This example was identical to Example 1 except that instead of 1 gram sericin, a gram of lysozyme was used.

In all the above cases, viz., Examples 1, 2 and 3, the crystals were shaped like a disc and were in the form of spherical assemblies of average size 1.2 µm, the thickness of each disc was 20 nm and average diameter was 300 nm.

### Antibacterial/bactericidal activity

An aqueous stock solution (1% w/v) of the zinc oxide was prepared. 100 µl of this solution was mixed with 900 µl of saline (0.85% NaCI) solution. In this manner, the active level of modified zinc oxide was maintained at 0.1% w/v. Thereafter, a culture of bacteria (*S.aureus* ATCC 6538) and (*E.coli* ATCC 10536) as indicated below in the tables, was added to the saline solution containing the zinc oxide of the invention.

The samples were incubated for 2/4/6/24 hours at 37 °C. After incubation, the samples were diluted with saline (1:10) and plated on Trypticase soy agar for enumeration of the residual bacterial count. The plate count was done to quantify the bactericidal activity. The data is summarised in tables 1 and 2. The log reduction is with respect to the control media.

**Table 1**

| | Activity against *S. aureus* | | | | | |
|---|---|---|---|---|---|---|
| | Total bacterial count (log₁₀) | | | log₁₀ reduction | | |
| | 2 hours | 4 hours | 6 hours | 2 hours | 4 hours | 6 hours |
| Control media | 5.0 | 4.9 | 4.5 | 0 | 0 | 0 |
| Commercial ZnO | 4.6 | 4.7 | 4.1 | 0.4 | 0.2 | 0.4 |
| Example 1 | 4.2 | 4.1 | 3.4 | 0.8 | 0.8 | 1.1 |
| Example 2 | - | - | 2.2 | - | - | 2.3 |
| Example 3 | - | - | 2.3 | - | - | 2.2 |

**Table 2**

| | Activity against *E.coli* | | | | | |
|---|---|---|---|---|---|---|
| | Total bacterial count (log₁₀) | | | log₁₀ reduction | | |
| | 2 hours | 4 hours | 6 hours | 2 hours | 4 hours | 6 hours |
| Control media | 5 | 4.9 | 5 | 0 | 0 | 0 |
| Example 1 | 3.1 | 2.5 | 2.3 | 1.9 | 2.4 | 2.7 |
| Commercial ZnO | 3.9 | 3.2 | 2.9 | 1.1 | 1.7 | 2.1 |

The data in tables 1 and 2 clearly demonstrates the antibacterial and the bactericidal activity of the crystal habit modified zinc oxides of Examples 1, 2 and 3.

### Example 4: Photo catalytic activity

The photocatalytic activity of hair functionalized with ZnO of the invention was measured by SAIC MVL series instrument equipped with UV light from a mercury lamp source (60 W, 365 nm) by following the degradation pattern of Methylene Blue (C16H18ClN3S.3H2O), λmax: 664 nm.

100 mL of 20 µM Methylene Blue was taken and to it 5 mg of calcined form of zinc oxide was added and stirred for 30 minutes at 400 rpm and 25 °C in dark to establish adsorption-desorption equilibrium between the dye and ZnO surface. The suspension was irradiated with UV light under stirring condition (at 400 rpm, 25 °C). Aliquots were withdrawn from the reactor at every 5 minutes during irradiation, centrifuged and their absorbance was recorded at 664 nm corresponding to λmax of Methylene Blue in water using a Perkin-Elmer Lambda-35 UV-Vis spectrophotometer. Degradation of blank dye was carried out under similar conditions without adding ZnO.

The data is summarised in Table 3.

**Table 3**

| Material | % degradation of dye/after | | |
|---|---|---|---|
| | 10 minutes | 20 minutes | 30 minutes |
| Dye | 20 | 36 | 46 |
| Example 1 | 56 | 79 | 92 |
| Comparative Example 1 | 41 | 66 | 79 |

The data in table 3 indicates that more of the dye degrades in the presence of zinc oxide made in accordance with this invention. This is direct indicator of the photo catalytic activity of the zinc oxide in accordance with this invention. If base is added to the Zn⁺² salt prior to addition of the protein, it results in formation of very small seed crystals of hexagonal ZnO particles in the medium, the resultant product (Comparative Example 1) shows lower photoluminescence and photo-catalytic activity compared to the inventive mode of addition.

### Example 5: Photoluminescence activity

The photoluminescence spectra of calcined forms of the modified zinc oxide (Example 1 and Example 2) was recorded using Fluoromax 4.0 Jobin Yvon Horiba spectrofluoro photometer equipped with Xenon lamp as the excitation source. The spectra were recorded at room temperature. The excitation wavelength was set to 325 nm and the emission spectra were captured from 350 nm to 600 nm. The excitation and emission slit width were set at 5 and 15 nm, respectively.

The data is summarised in Table 4.

**Table 4**

| | Fluorescence Intensity (a.u.) of calcined ZnO @ 452 nm |
|---|---|
| Commercial ZnO | 0 |
| Example 1 | 29 |
| Comparative Example 1 | 12 |

The data in Tabe 4 indicates that the modified zinc oxide of the invention had better photoluminescence property as compared to commercial zinc oxide as well as the Comparative Example 1.

## Claims

1. Habit modified crystals of zinc oxide comprising entrapped particles of protein,
wherein said crystals are shaped like a disc and are in the form of spherical assemblies of average size 0.8 µm to 1.5 µm and where the thickness of each disc is 10 nm to 30 nm and average diameter is 200 nm to 500 nm wherein said protein is water-soluble and wherein said protein is at least one of sericin, bovine serum albumin, gelatin, egg-albumin, casein, zein, whey or lysozyme.

2. Habit modified crystals of zinc oxide as claimed in claim 1 for use as an antimicrobial agent.

3. Habit modified crystals of zinc oxide as claimed in claim 1 for use as a bactericidal agent.

4. Habit modified crystals of zinc oxide as claimed in claim 1 for use as a photo catalytic material.

5. Habit modified crystals of zinc oxide as claimed in claim 1 for use as a photo luminescent material.

6. Non-therapeutic use of habit modified crystals of zinc oxide as claimed in claim 1 as an antimicrobial agent.

7. Non-therapeutic use of habit modified crystals of zinc oxide as claimed in claim 1 as a bactericidal agent.

8. Use of habit modified crystals of zinc oxide as claimed in claim 1 as a photo catalytic material.

9. Use of habit modified crystals of zinc oxide as claimed in claim 1 as a photo luminescent material.

10. A process of making habit modified crystals of zinc oxide as claimed in claim 1 comprising the steps of:
(i) mixing aqueous solution of a water-soluble protein with aqueous solution of a non-hydrolysable water-soluble zinc salt wherein said protein is water-soluble and wherein said protein is at least one of sericin, bovine serum albumin, gelatin, egg-albumin, casein, zein, whey or lysozyme;
(ii) adding a weak base thereto;
(iii) heating the reaction mixture of step (ii) to attain temperature of 60 to 90 °C; and,
(iv) filtering the contents of step (iii), washing the residue with water and drying it to obtain said habit modified crystals of zinc oxide as the filtrate.

11. A process as claimed in claim 10 wherein heated reaction mixture of step (iii) is autoclaved under pressure of 4 to 6 bar in an inert atmosphere.

12. A process as claimed in claim 10 or 11 wherein said habit modified crystals of zinc oxide are further calcined at 600 °C to 800 °C.

## Patentansprüche

1. Habitus-modifizierte Kristalle von Zinkoxid, umfassend eingeschlossene Partikel von Protein, wobei die Kristalle wie eine Scheibe geformt sind und in der Form kugelförmiger Anordnungen einer durchschnittlichen Größe von 0,8 µm bis 1,5 µm vorliegen und wobei die Dicke jeder Scheibe 10 nm bis 30 nm und der durchschnittliche Durchmesser 200 nm bis 500 nm beträgt, wobei das Protein wasserlöslich ist und wobei das Protein mindestens eines von Sericin, Rinderserumalbumin, Gelatine, Ei-Albumin, Casein, Zein, Molke oder Lysozym ist.

2. Habitus-modifizierte Kristalle von Zinkoxid, wie im Anspruch 1 beansprucht, zur Verwendung als antimikrobielles Mittel.

3. Habitus-modifizierte Kristalle von Zinkoxid, wie im Anspruch 1 beansprucht, zur Verwendung als bakterizides Mittel.

4. Habitus-modifizierte Kristalle von Zinkoxid, wie im Anspruch 1 beansprucht, zur Verwendung als photokatalytisches Material.

5. Habitus-modifizierte Kristalle von Zinkoxid, wie im Anspruch 1 beansprucht, zur Verwendung als photolumineszierendes Material.

6. Nicht-therapeutische Verwendung von habitus-modifizierten Kristallen von Zinkoxid, wie im Anspruch 1 beansprucht, als antimikrobielles Mittel.

7. Nicht-therapeutische Verwendung von habitus-modifizierten Kristallen von Zinkoxid, wie im Anspruch 1 beansprucht, als bakterizides Mittel.

8. Verwendung von habitus-modifizierten Kristallen von Zinkoxid, wie im Anspruch 1 beansprucht, als photokatalytisches Material.

9. Verwendung von habitus-modifizierten Kristallen von Zinkoxid, wie im Anspruch 1 beansprucht, als photolumineszierendes Material.

10. Verfahren zur Herstellung von habitus-modifizierten Kristallen von Zinkoxid, wie im Anspruch 1 beansprucht, umfassend die Schritte:
(i) Mischen einer wässrigen Lösung eines wasserlöslichen Proteins mit einer wässrigen Lösung eines nicht-hydrolysierbaren wasserlöslichen Zinksalzes, wobei das Protein wasserlöslich ist und wobei das Protein mindestens eines von Sericin, Rinderserumalbumin, Gelatine, Ei-Albumin, Casein, Zein, Molke oder Lysozym ist;
(ii) dazu Zugeben einer schwachen Base;
(iii) Erhitzen der Reaktionsmischung des Schritts (ii), um eine Temperatur von 60 bis 90°C zu erreichen; und
(iv) Filtrieren des Inhalts des Schritts (iii), Waschen des Rückstands mit Wasser und Trocknen, um die habitus-modifizierten Kristalle von Zinkoxid als Filtrat zu erhalten.

11. Verfahren, wie im Anspruch 10 beansprucht, wobei die erhitzte Reaktionsmischung von Schritt (iii) unter einem Druck von 4 bis 6 bar in einer inerten Atmosphäre autoklaviert wird.

12. Verfahren, wie im Anspruch 10 oder 11 beansprucht, wobei die habitus-modifizierten Kristalle von Zinkoxid ferner bei 600°C bis 800°C calciniert werden.

## Revendications

1. Cristaux d'oxyde de zinc à habitus modifié comprenant des particules piégées de protéine, dans lesquels lesdits cristaux sont façonnés comme un disque qui sont dans la forme d'assemblages sphériques de dimension moyenne 0,8 µm à 1,5 µm et où l'épaisseur de chaque disque est de 10 nm à 30 nm et le diamètre moyen est de 200 nm à 500 nm dans lesquels ladite protéine est soluble dans l'eau et dans lesquels ladite protéine est au moins une de séricine, sérum-albumine bovine, gélatine, albumine d'œuf, caséine, zéine, lactosérum ou lysozyme.

2. Cristaux d'oxyde de zinc à habitus modifié selon la revendication 1 pour une utilisation comme un agent antimicrobien.

3. Cristaux d'oxyde de zinc à habitus modifié selon la revendication 1 pour une utilisation comme un agent bactéricide.

4. Cristaux d'oxyde de zinc à habitus modifié selon la revendication 1 pour une utilisation comme un matériau photocatalytique.

5. Cristaux d'oxyde de zinc à habitus modifié selon la revendication 1 pour une utilisation comme un matériau photoluminescent.

6. Utilisation non-thérapeutique de cristaux d'oxyde de zinc à habitus modifié selon la revendication 1 comme un agent antimicrobien.

7. Utilisation non-thérapeutique de cristaux d'oxyde de zinc à habitus modifié selon la revendication 1 comme un agent bactéricide.

8. Utilisation de cristaux d'oxyde de zinc à habitus modifié selon la revendication 1 comme un matériau photocatalytique.

9. Utilisation de cristaux d'oxyde de zinc à habitus modifié selon la revendication 1 comme un matériau photoluminescent.

10. Procédé de fabrication de cristaux d'oxyde de zinc à habitus modifié selon la revendication 1 comprenant les étapes de :
(i) mélange d'une solution aqueuse d'une protéine soluble dans l'eau avec une solution aqueuse d'un sel de zinc soluble dans l'eau non-hydrolysable dans lequel ladite protéine est soluble dans l'eau et dans lequel ladite protéine est au moins une de séricine, sérum-albumine bovine, gélatine, albumine d'œuf, caséine, zéine, lactosérum ou lysozyme ;
(ii) addition d'une base faible à celle-ci ;
(iii) chauffage du mélange réactionnel de l'étape (ii) pour atteindre une température de 60 à 90°C ; et,
(iv) filtration des contenus de l'étape (iii), lavage du résidu avec de l'eau et séchage de celui-ci pour obtenir lesdits cristaux d'oxyde de zinc à habitus modifié comme le filtrat.

11. Procédé selon la revendication 10, dans lequel le mélange réactionnel chauffé de l'étape (iii) est mis en autoclave sous pression de 4 à 6 bars dans une atmosphère inerte.

12. Procédé selon la revendication 10 ou 11, dans lequel lesdits cristaux d'oxyde de zinc à habitus modifié sont de plus calcinés à de 600°C à 800°C.
